# EUROPEAN PATENT APPLICATION

(11) **EP 4 765 845 A1**
(43) Date of publication of application: **24.06.2026**
(21) Application number: 25222181.7
(22) Date of filing: 10.12.2025
(51) Int. Cl.: H04N 23/71, H04N 23/73, H04N 23/745, H04N 25/531, H04N 25/773

(54) **IMAGING APPARATUS AND METHOD OF CONTROLLING IMAGING APPARATUS**

(30) Priority: 20.12.2024 JP 2024224722
(71) Applicant: Canon Kabushiki Kaisha, Tokyo, 146-8501 (JP)
(72) Inventor: UOYA, Makoto, Tokyo, 146-8501 (JP)
(74) Representative: Canon Europe Limited

(57) **Abstract**

An imaging apparatus includes an image pickup element including a light receiving unit configured to output a pulse signal in response to incidence of a photon, and a counting unit configured to count the pulse signal, an acquisition unit configured to acquire a blinking frequency of a light source and a light emission time period of the light source, and a control unit configured to control an exposure time period for an image in the image pickup element and a counting frequency at which the counting unit performs counting based on the acquired blinking frequency of the light source and the acquired light emission time period of the light source.

## Description

### Technical Field

The present disclosure relates to an imaging apparatus and a method of controlling the imaging apparatus.

### BACKGROUND

Known is an image pickup element of a photon-counting method, in which avalanche photodiodes (APDs) to which reverse bias voltage higher than breakdown voltage is applied are arrayed, and that uses a photodiode array for detecting the number of photons incident on a certain range. Additionally, when moving image capturing is performed under a blinking light source such as a fluorescent light, there is a case where cyclic variations of light and shade, which are called flicker, appear in captured images. To eliminate flicker, known is a method of executing detection, which is generally called flicker detection, detecting a blinking cycle of the blinking light source, and adjusting an accumulation time period (exposure time period) of the image pickup element in synchronization with the blinking cycle to suppress a luminance change in images.

The image pickup element of the photon-counting method converts flowing current into a change in voltage signal by avalanche multiplication that occurs when a photon is incident, outputs the change in voltage signal into a pulse, and counts the number of pulses to generate a pixel signal. Japanese Patent Application Laid-Open No. 2020-127123 proposes a technique of, in imaging with a photon-counting image sensor under a flickering light source, detecting the presence or absence of the flickering light source and characteristics of the flickering light source in an imaging range based on a frequency of output of pulse signals in response to incidence of photons. Additionally, Japanese Patent Application Laid-Open No. 2022-46310 proposes a technique of measuring charges generated in a photoelectric conversion circuit outside an exposure time period of the photoelectric conversion circuit to specify a frequency and duty ratio of a light source, and adjusting the exposure time period of the photoelectric conversion circuit, which makes it possible to reduce dispersion of brightness when an image of an object, which repeatedly flicker, is captured.

In the image pickup element of the photon-counting method, the number of photons that can be counted per unit time is determined by so-called dead time that is limited by a device structure of an APD. In a case where a plurality of photons is incident in a time period shorter than the dead time, the number of pulses to be counted becomes one. Thus, in a case of the blinking light source, there is an issue that photons are incident in a short time in a concentrated manner, the number of photons failed to be counted increases, and actual brightness and colors cannot be reproduced in images.

### SUMMARY

The present disclosure in its first aspect provides an imaging apparatus as specified in claim 1. Optional features are specified in claims 2 to 13.

The present disclosure in its second aspect provides a method of controlling an imaging apparatus as specified in claim 14.

Features of the present disclosure will become apparent from the following description of embodiments with reference to the attached drawings. The following description of embodiments is described by way of example.

### BRIEF DESCRIPTION OF THE DRAWINGS

Fig. 1 is a diagram illustrating a configuration example of an imaging apparatus.
Fig. 2 is a flowchart describing an example of processing to be executed in the imaging apparatus.
Fig. 3 is a chart for describing one light emission of a light source and counting according to a first embodiment.
Fig. 4 is a chart for describing a photon-counting operation according to the first embodiment.
Fig. 5 is a chart illustrating an example of output of light in a case where output of light from the light source changes over time.
Fig. 6 is a chart for describing an example of a case of using an image pickup element of a rolling shutter mode according to the first embodiment.
Fig. 7 is a chart for describing a photon-counting operation according to a second embodiment.
Fig. 8 is a chart for describing the photon-counting operation according to the second embodiment.
Fig. 9 is a chart for describing a photon-counting operation according to a third embodiment.
Fig. 10 is a chart for describing the photon-counting operation according to the third embodiment.
Fig. 11 is a chart for describing the photon-counting operation according to the third embodiment.

### DESCRIPTION OF THE EMBODIMENTS

Embodiments of the present disclosure will be described below based on drawings. The following embodiments do not limit the claimed invention. While a plurality of features is described in the embodiments, all combinations of these features are not necessarily essential to the present disclosure, and these features may be freely combined. Furthermore, in the accompanying drawings, identical or similar components are denoted by an identical reference number, and an overlapping description is omitted.

### <First Embodiment>

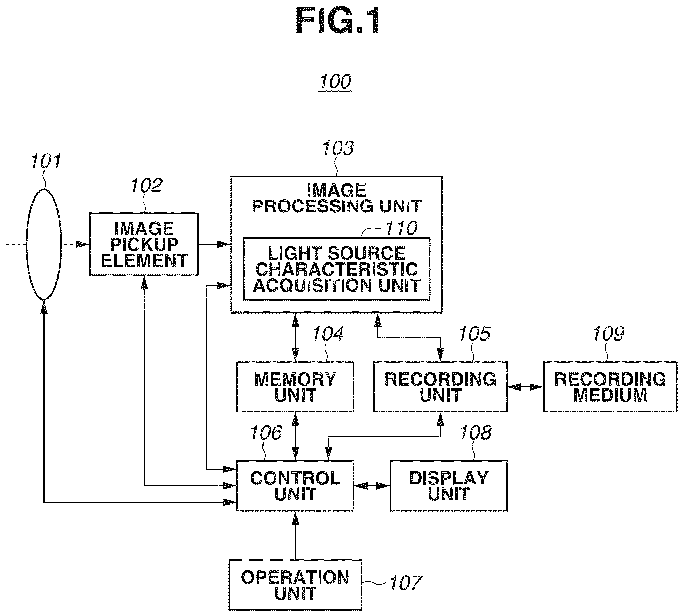

Fig. 1 is a block diagram illustrating a functional configuration example of an imaging apparatus 100 according to a first embodiment.

The imaging apparatus 100 includes an imaging lens 101, an image pickup element 102, an image processing means (e.g. an image processing unit 103), a memory unit 104, a recording unit 105, a control means (e.g. a control unit 106), an operation unit 107, a display unit 108, and a recording medium 109.

The imaging lens 101 is an imaging optical system that forms a subject optical image on an imaging plane of the image pickup element 102, and includes a plurality of lenses including a focus lens. Additionally, the imaging lens 101 includes an aperture stop and a neutral density (ND) filter. The imaging lens 101 may be detachably mounted on the imaging apparatus 100, or may be undetachably fixed to the imaging apparatus 100.

The image pickup element 102 is an image pickup element of a photon-counting method, which includes a light receiving means (e.g. a light receiving unit) that outputs a pulse signal in response to incidence of a photon and a counting means (e.g. a counting unit) that counts the pulse signal. In the image pickup element 102, pixels each including an avalanche photodiode (APD) as a photoelectric conversion element are two-dimensionally arrayed, and a counter that determines the presence or absence of a photon to count photons for each pixel is provided. Additionally, as described in Japanese Patent Application Laid-Open No. 2023-61883, the image pickup element 102 is capable of recharging the APD with bias voltage, which can be avalanche-multiplied in a Geiger mode, using a clock signal set by the control unit 106.

The image processing unit 103 applies signal processing to image data read out from the image pickup element 102, and generates image data for display or image data for recording. The signal processing applied by the image processing unit 103 includes, in an image generation process, reordering of signals, correction of defective pixels, noise reduction, color conversion, white balance correction, gamma correction, resolution conversion, data compression, and sharpness adjustment. These are examples of the signal processing executable by the image processing unit 103, and do not limit signal processing executed by the image processing unit 103. Additionally, the image processing unit 103 outputs information obtained by application of the signal processing to the image data to the control unit 106. The image processing unit 103 includes an acquisition means (e.g. light source characteristic acquisition unit 110). The light source characteristic acquisition unit 110 estimates cyclic information regarding a flicker phenomenon, such as a blinking frequency of the light source, a time duration of lighting time, or a lighting interval, and acquires these pieces of information as characteristic information regarding the light source. The image processing unit 103 is an example of an image processing unit, and the light source characteristic acquisition unit 110 is an example of an acquisition unit. One or more functions of the image processing unit 103 may be implemented by, for example, a dedicated hardware circuit such as an application-specific integrated circuit (ASIC) designed to implement a specific function. Additionally, regarding one or more functions of the image processing unit 103, a specific function may be implemented by a processor such as a digital signal processor (DSP) executing software.

The memory unit 104 is configured to include, for example, a random-access memory (RAM) or a read-only memory (ROM). The memory unit 104 is used as a buffer for image data, working areas for the image processing unit 103 and the control unit 106, and a video memory for the display unit 108. Additionally, the memory unit 104 includes a non-volatile storage area. The non-volatile storage area is used for, for example, storing a program executed by the control unit 106, setting values used by the control unit 106, setting values of the imaging apparatus 100, and data for display of user interfaces (Uls).

The recording unit 105 executes, for example, writing and readout of a data file to/from the recording medium 109 as a semiconductor memory card based on control of the control unit 106.

The control unit 106 is, for example, a processor, and controls the whole of the imaging apparatus 100. The control unit 106 is an example of a control unit. The control unit 106, for example, loads a program stored in the ROM or the like included in the memory unit 104 in a system memory in the memory unit 104, executes the program, controls an operation of each unit, and thereby implements functions of the imaging apparatus 100. For example, in response to detection of an operation of the operation unit 107, the control unit 106 executes an operation corresponding to the detected operation.

The operation unit 107 is an input device such as a switch, a button, a touch pad, or a dial, and is used by a user to give an instruction to the imaging apparatus 100. A function is statically or dynamically allocated to each input device included in the operation unit 107. With this configuration, each input device functions as a shutter button, a moving image recording/stop button, a menu button, a direction key, a confirm button, an operation mode switching dial, or the like. Additionally, in a case where the display unit 108 is a touch display, an input device reproduced as software to be implemented by combination of a touch panel and a graphical user interface (GUI) is also included as the input device in the operation unit 107.

The display unit 108 is, for example, a flat panel display, and displays an image based on a display signal supplied from the control unit 106. The display unit 108, for example, displays live-view images, a menu image, or the like based on a display signal supplied from the control unit 106. Alternatively, the display unit 108 may be a touch display.

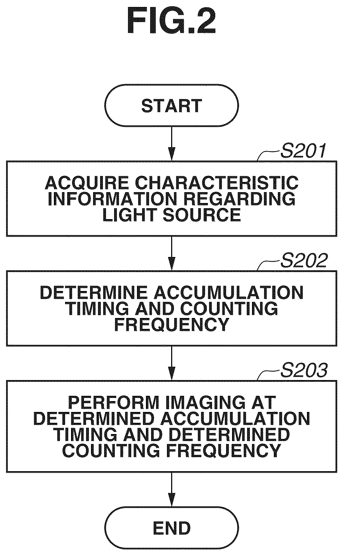

Processing executed in the imaging apparatus 100 according to the present embodiment is described below. Fig. 2 is a flowchart describing an example of processing to be executed in the imaging apparatus 100. The control unit 106 in the imaging apparatus 100 controls an operation of each unit in the imaging apparatus 100 to execute the processing in the flowchart illustrated in Fig. 2. In step S201, the control unit 106 uses the light source characteristic acquisition unit 110 or the like to acquire characteristic information regarding the light source. In step S202, the control unit 106 determines an accumulation timing and a counting frequency in the image pickup element 102 based on the characteristic information regarding the light source acquired in step S201. In step S203, the control unit 106 sets, in the image pickup element 102, the accumulation timing and the counting frequency that are determined in step S202, and the image pickup element 102 performs imaging at the accumulation timing and the counting frequency. Details of processing in each step are described below.

In step S201, the light source characteristic acquisition unit 110 estimates cyclic information regarding the light source, and the control unit 106 acquires the estimated cyclic information regarding the light source as the characteristic information regarding the light source. For example, the light source characteristic acquisition unit 110 stores an average value of luminance of subject images for each of a plurality of imaging frames, uses discrete Fourier transform (DFT) on stored data, and thereby estimates cyclic information regarding a time change in luminance (a blinking frequency, a duration of lighting time, or the like). The estimation of the cyclic information is not limited to the above-mentioned example. For example, another method such as a flicker detection method as described in International Publication No. 2016/132615 may be used. Alternatively, after a user of the imaging apparatus 100 designates the number of light sources and frequency information regarding each light source using the operation unit 107, the control unit 106 may notify the light source characteristic acquisition unit 110 of the designated frequency information, and the light source characteristic acquisition unit 110 may identify the cyclic information regarding each light source based on the frequency information.

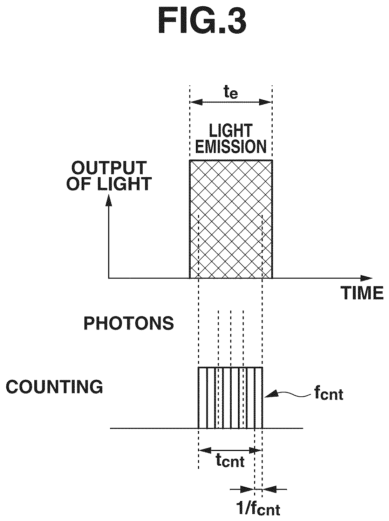

In step S202, the control unit 106 determines an accumulation timing (exposure time period) and a counting frequency in the image pickup element 102 in synchronization with each light emission time period of the light source within the set shutter speed, based on the characteristic information regarding the light source, which is acquired in step S201. Fig. 3 is a chart for describing one light emission of the light source and counting according to the first embodiment. "Counting" in Fig. 3 means, in each pixel of the image pickup element 102, counting of incident photons with a counter included in each pixel at a counting frequency f_{cnt}. It is possible to count one photon with resolution (1/f_{cnt}). The control unit 106 determines a counting time period t_{cnt} in which the number of incident photons is counted based on a light emission time period tₑ identified in step S201 and a pre-set permissible range tε so that |tₑ - t_{cnt}| < tε is satisfied. That is, the control unit 106 determines the counting time period t_{cnt} so that a difference between the light emission time period tₑ and the counting time period t_{cnt} does not exceed the permissible range tε. The control unit 106 determines the counting frequency f_{cnt} so that the image pickup element 102 can count photons a maximum predetermined number of times K within the counting time period t_{cnt}. That is, the control unit 106 determines the counting frequency f_{cnt} so that the image pickup element 102 can count photons the predetermined number of times within the exposure time period. For example, the counting frequency f_{cnt} is determined by f_{cnt} = K/t_{cnt}. The determination of the counting frequency is not limited to the above-mentioned example, and may be made by another method. In some examples, the exposure time period may match the acquired light emission time period of the light source. For example, the exposure time period may be substantially equal to the acquired light emission time period of the light source.

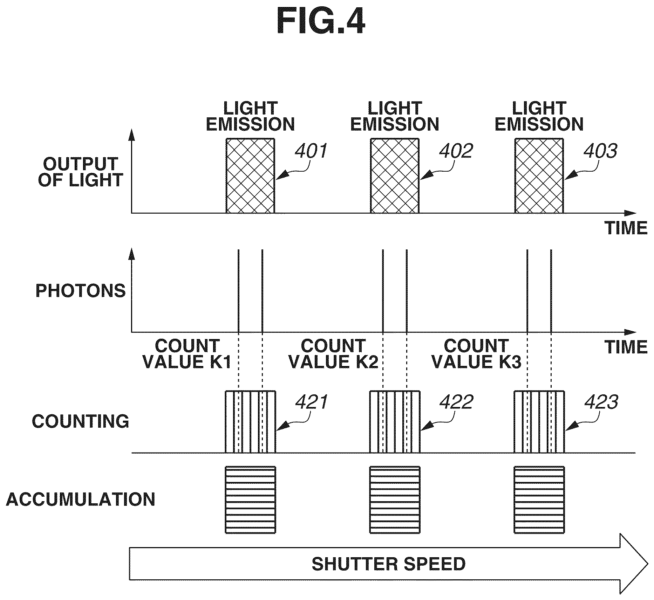

Imaging performed in step S203 is now described. Fig. 4 is a chart for describing a photon-counting operation in one frame according to the first embodiment. The image pickup element 102 performs an accumulation operation (a count operation or a counting operation) in synchronization with light emission time periods 401, 402, and 403 of the light source based on accumulation timings (exposure time periods) that are set by the control unit 106 and that are determined in step S202. Additionally, the image pickup element 102 performs counting in the light emission time periods 401, 402, and 403 of the light source at the counting frequency that is set by the control unit 106 and that is determined in step S202. The image pickup element 102 stops the counting operation in a period other than the light emission time periods (counting time periods t_{cnt}). In other words, the image pickup element 102 stops the counting operation in a period other than the exposure time periods. The image pickup element 102 obtains an added value of count values (counted values) K1, K2, and K3 obtained by counting operations 421, 422, and 423 corresponding to the light emission time periods 401, 402, and 403 of the light source as a count value (counted value) in one frame.

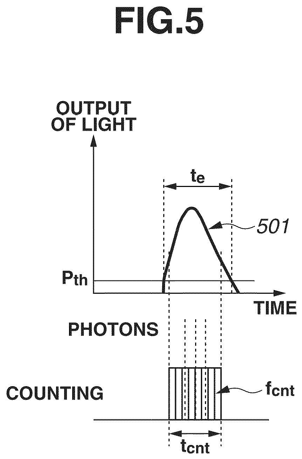

In Figs. 3 and 4, the output of light from the light source is constant in each light emission time period. However, even in a case where the output of light from the light source changes over time, it is possible to perform counting in a similar manner. Fig. 5 is a chart illustrating an example of output of light in the case where the output of light from the light source changes over time. In the case where the output of light from the light source changes over time in this manner, for example, the control unit 106 is only required to determine that the light emission time period tₑ is a time period in which output of light 501 is a threshold pₜₕ or more.

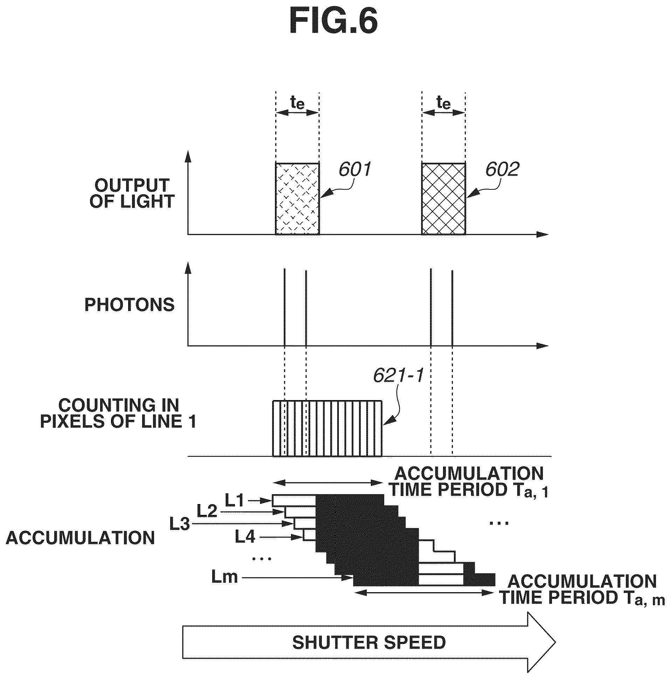

The above description is on the premise that the image pickup element 102 is driven in a global shutter mode, but an image pickup element of a rolling shutter mode can also be employed. Fig. 6 is a chart for describing accumulation in each line in a case of using the image pickup element of the rolling shutter mode as the image pickup element 102 according to the first embodiment. Fig. 6 illustrates light emission time periods 601 and 602 of the light source, and a counting operation 621-1 in pixels of a line 1 (L1). In imaging in step S203 in Fig. 2, the control unit 106 sets accumulation time periods T_{a,1}, T_{a,2}, ..., T_{a,m} of pixels of lines L1, L2, ..., Lm in the image pickup element 102 so that each include at least part of the light emission time period tₑ of the light source as illustrated in Fig. 6, and drives the image pickup element 102. Since there is a difference in light emission time of the blinking light source during the accumulation time period of each line, the control unit 106 may multiply a count value in pixels of each line by a gain according to the light emission time of the blinking light source and perform gain correction.

According to the present embodiment, it is possible to increase the counting frequency for counting at the time of light emission of the blinking light source based on the blinking frequency and light emission periods of the blinking light source, suppress a loss in counting of photons, and suppress a degree of color shift that occurs in a case where imaging is performed with the blinking light source. In this manner, it is possible to control the exposure time and the counting frequency in the image pickup element of the photon-counting method according to the light emission time periods of the blinking light source, suppress a counting loss, and improve brightness of an image and color reproducibility. Additionally, increasing the counting frequency according to the light emission time periods of the blinking light source makes it possible to suppress an increase in power consumption due to the increase in counting frequency in comparison with a case of increasing the counting frequency in all time periods regardless of the light emission time periods of the blinking light source.

### <Second Embodiment>

A second embodiment is now described. In the following description of the second embodiment, configurations, operations, and the like that are similar to those in the above-mentioned first embodiment will not be described and points different from the first embodiment will be described. The second embodiment is different from the first embodiment in that the image pickup element 102 performs imaging under a plurality of light sources with different cycles.

In the second embodiment, the image processing unit 103 in the imaging apparatus 100 combines a plurality of images corresponding to a plurality of frames and obtained by imaging in respective frames, and generates a display image to be displayed on the display unit 108 or an image to be recorded by the recording unit 105 in the recording medium 109. The flow of processing from acquisition of characteristic information regarding each light source to imaging, which is executed in the imaging apparatus 100 in the second embodiment, is similar to the flow of processing in the flowchart illustrated in Fig. 2, and thus a description of overlapping processing is omitted.

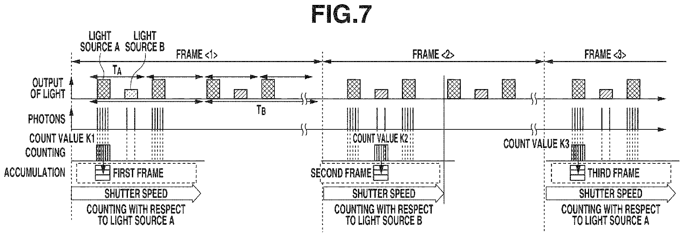

Fig. 7 is a chart for describing a photon-counting operation according to the second embodiment. In step S201, the light source characteristic acquisition unit 110 estimates, as cyclic information regarding a plurality of light sources, light sources A and B illustrated in Fig. 7, a blinking cycle T_{A} of the light source A and a blinking cycle T_{B} of the light source B, and light emission timings of the light sources A and B, and the control unit 106 acquires the estimated cyclic information regarding the light sources A and B. Alternatively, after the user of the imaging apparatus 100 designates the number of light sources and frequency information regarding each light source using the operation unit 107, the control unit 106 may notify the light source characteristic acquisition unit 110 of the designated frequency information, and the light source characteristic acquisition unit 110 may identify the cyclic information regarding each light source based on the frequency information. In the example illustrated in Fig. 7, assume that the blinking cycle T_{B} of the light source B is twice the blinking cycle T_{A} of the light source A. That is, assume that the blinking frequency f_{A} of the light source A is twice the blinking frequency f_{B} of the light source B. Additionally, assume that the light source A emits light four times and the light source B emits light two times in one frame.

In step S202, the control unit 106 determines an accumulation timing and a counting frequency in the image pickup element 102 in synchronization with each light emission time period of the light sources A and B within the set shutter speed, based on the characteristic information regarding the light sources A and B, which is acquired in step S201. Alternatively, in substitution for the characteristic information regarding the light sources A and B, which is acquired in step S201, frequency information designated by the user of the imaging apparatus 100 using the operation unit 107 may serve as characteristic information regarding each of the light sources A and B. Additionally, in step S202, in consideration of a difference in luminance between the light sources A and B due to a difference in blinking frequency, count values (counted values) K1, K2, ... obtained as counting results in respective frames may be multiplied by a gain as appropriate. Gains G_{A} and G_{B} by which respective counting results of the light sources A and B are multiplied are determined based on, for example, a ratio between the blinking frequency f_{A} of the light source A and the blinking frequency f_{B} of the light source B. In the example in Fig. 7, for example, a relation of G_{A} : G_{B} = f_{A} : f_{B} = 2 : 1 holds.

In step S203, the image pickup element 102 performs an accumulation operation in synchronization with respective light emission time periods of the light sources A and B based on the accumulation timing and the counting frequency that are set by the control unit 106 and that are determined in step S202. In the second embodiment, a light source subjected to counting by the image pickup element 102 is changed between adjacent frames. In the example illustrated in Fig. 7, the light source subjected to counting is changed frame by frame so that, for example, the light source A is subjected to counting in a frame <1>, the light source B is subjected to counting in a frame <2>, the light source A is subjected to counting in a frame <3>, and this pattern is repeated. Alternatively, the count values (counted values) K1, K2, ... obtained as counting results in respective frames may be respectively multiplied by the gains G_{A} and G_{B} determined in step S202 depending on a type of a light source with which accumulation is performed in each frame. Additionally, the image pickup element 102 stops the counting operation in a period other than the light emission time period as a counting target in each frame (other than the exposure time period in each frame).

In the second embodiment, the image processing unit 103 combines images obtained in this manner in adjacent frames, and thereby acquires a display image and an image to be recorded in each frame. In the example illustrated in Fig. 7, images acquired in the frames <1> and <2> are combined to generate one image, and images acquired in the frames <2> and <3> are combined to generate one image. The selection of frames as a target of combining is not limited thereto.

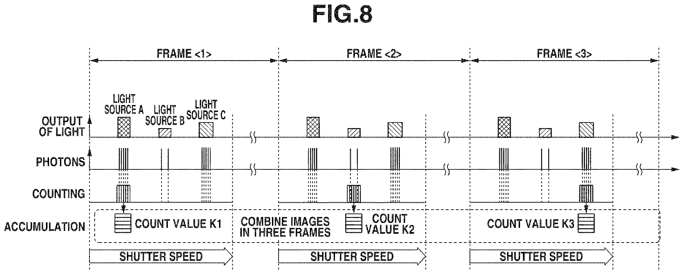

While the number of types of light sources is two in the example illustrated in Fig. 7, it is also possible to similarly perform counting with respect to three or more types of light sources and generate an image based on a count value obtained as a counting result in each frame. Fig. 8 is a chart for describing another example of the photon-counting operation according to the second embodiment. For example, in a case where there are three light sources, light sources A, B, and C as illustrated in Fig. 8, the light source subjected to counting is changed frame by frame so that the light source A is subjected to counting in the frame <1>, the light source B is subjected to counting in the frame <2>, the light source C is subjected to counting in a frame <3>, and this pattern is repeated. Then, images obtained in a plurality of frames are combined based on count values (counted values) K1, K2, ... obtained as counting results in respective frames, whereby a display image and an image to be recorded are acquired. In the example illustrated in Fig. 8, for example, the image processing unit 103 combines images acquired in three consecutive frames of the frames <1> to <3> to acquire one final image or one final image to be recorded.

Even in a case where cycles of three or more types of light sources are different, it is also possible to similarly perform counting as described with reference to Figs. 7 and 8, and generate an image based on a count value obtained as a counting result in each frame.

According to the present embodiment, similarly to the first embodiment, it is possible to suppress a counting loss in the image pickup element in the photon-counting method, suppress a degree of color shift that occurs at the time of imaging with the blinking light source, and improve brightness of an image and color reproducibility. Additionally, increasing the counting frequency according to the light emission time periods of the blinking light source makes it possible to suppress an increase in power consumption due to the increase in counting frequency in comparison with a case of increasing the counting frequency in all time periods regardless of the light emission time periods of the blinking light source. Additionally, even if a plurality of blinking light sources exists, combination of images in a plurality of frames, which are captured while a light source subjected to counting is changed frame by frame, makes it possible to acquire captured images with the plurality of blinking light sources.

### <Third Embodiment>

A third embodiment is now described. In the following description of the third embodiment, configurations, operations, and the like that are similar to those in the above-mentioned first or second embodiment will not be described and points different from the first or second embodiment will be described. The third embodiment is different from the first embodiment in that the image pickup element 102 performs imaging in a case where both a blinking light source and a constant light source that outputs constant light exist in a mixed manner.

In the third embodiment, the image processing unit 103 in the imaging apparatus 100 combines a plurality of images, and generates a display image to be displayed on the display unit 108 or an image to be recorded by the recording unit 105 in the recording medium 109. The flow of processing from acquisition of characteristic information regarding each light source to imaging, which is executed in the imaging apparatus 100 in the third embodiment, is similar to the flow of processing in the flowchart illustrated in Fig. 2, and thus a description of overlapping processing is omitted.

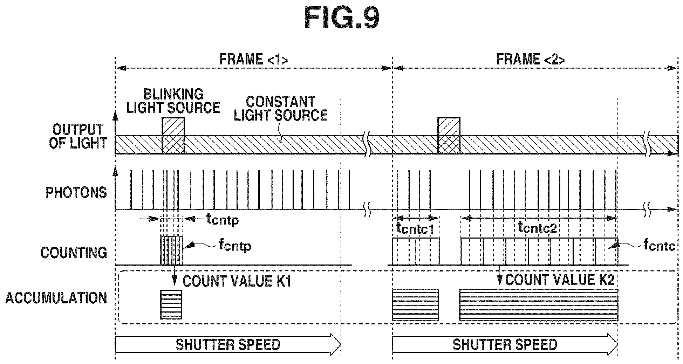

Fig. 9 is a chart for describing a photon-counting operation according to the third embodiment. In step S201, the light source characteristic acquisition unit 110 estimates cyclic information regarding a blinking light source illustrated in Fig. 9, and the control unit 106 acquires the estimated cyclic information regarding the light source. Alternatively, after the user of the imaging apparatus 100 designates the number of light sources and frequency information regarding each light source using the operation unit 107, the control unit 106 may notify the light source characteristic acquisition unit 110 of the designated frequency information, and the light source characteristic acquisition unit 110 may identify the cyclic information regarding each light source based on the frequency information.

In step S202, the control unit 106 determines counting frequencies regarding the constant light source and the blinking light source. Assume that the predetermined number of times of counting that can be performed by the image pickup element 102 is K. A counting frequency f_{cntp} of the blinking light source is determined by f_{cntp} = K/t_{cntp} where a counting time period of the blinking light source is t_{cntp}. Additionally, a counting frequency f_{cntc} of the constant light source is determined by f_{cntc} = K/t_{cntc} where a counting time period of the constant light source is t_{cntc}. As illustrated in Fig. 9, since the accumulation operation (counting operation) with respect to the constant light source is performed in a divided manner avoiding the light emission time period of the blinking light source, a relation of t_{cntc} = t_{cntc1} + t_{cntc2} holds. Hence, in the example illustrated in Fig. 9, the counting frequency f_{cntc} of the constant light source is determined by f_{cntc} = K/(t_{cntc1} + t_{cntc2}). The determination of the counting frequency is not limited to the above-mentioned example, and may be made by another method.

In step S203, the image pickup element 102 performs a counting operation while changing a light source subjected to counting between adjacent frames. In the example illustrated in Fig. 9, the image pickup element 102 performs counting (accumulation) in a light emission time period of the blinking light source in a frame <1> based on the accumulation timing and the counting frequency that are set by the control unit 106 and that are determined in step S202. In the frame <1>, the image pickup element 102 stops the counting operation in a period other than the light emission time period of the blinking light source. In a subsequent frame <2>, the image pickup element 102 performs counting (accumulation) with respect to the constant light source based on the accumulation timing and the counting frequency that are set by the control unit 106 and that are determined in step S202, and stops the counting operation in the light emission time period of the blinking light source. In a third frame or subsequent frames, the image pickup element 102 repeats counting (accumulation) with respect to the blinking light source and counting (accumulation) with respect to the constant light source in a similar manner while changing a light source subjected to counting depending on a frame.

In the second embodiment, the image processing unit 103 performs counting with respect to each light source, combines obtained images in adjacent frames, and thereby acquires a display image or an image to be recorded in each frame. In the example illustrated in Fig. 7, images acquired in the frames <1> and <2> are combined to generate one image. The image processing unit 103 combines images in subsequent frames in a similar manner, and can thereby acquire a display image or an image to be recorded.

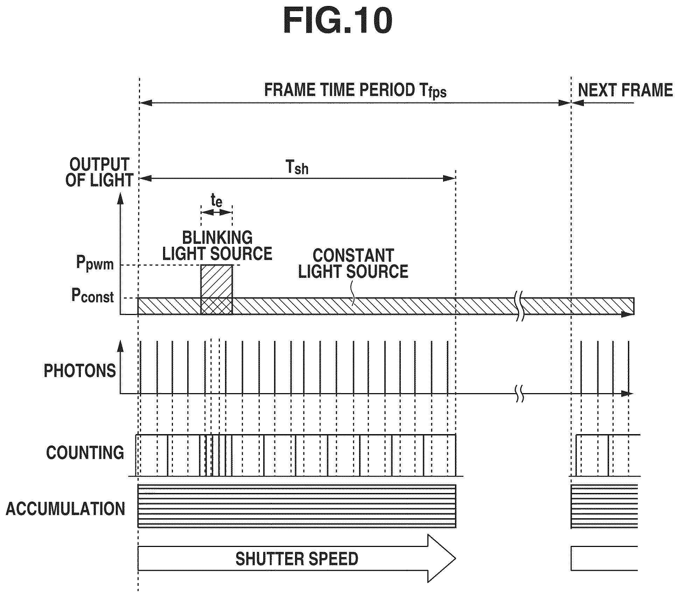

In the above-description, the light source subjected to counting is changed between adjacent frames. Alternatively, in the present embodiment, the counting frequency may be changed within one frame as illustrated in Fig. 10. Fig. 10 is a chart for describing another example of the photon-counting operation according to the third embodiment. For example, as illustrated in Fig. 10, by changing a counting frequency of the image pickup element 102 between a time period in which the blinking light source emits light and a time period in which only the constant light source emits light, it is possible to prevent a counting loss in the light emission time period of the blinking light source.

For example, in the example illustrated in Fig. 10, the counting frequency is determined based on output P_{pwm} of light from the blinking light source, output P_{const} of light from the constant light source, and the predetermined number of times K as a total value of counting of the image pickup element 102 within a frame. Additionally, in a case where the counting frequency of the constant light is f_{cntc}, and the counting frequency of the blinking light source is f_{cntp}, a relation of f_{cntc} : f_{cntp} = P_{pwm} : P_{const} holds. Alternatively, with use of an inverse ratio between the light emission time period tₑ of the blinking light source and the accumulation time period (shutter speed) Tₛₕ, a relation of f_{cntc} : f_{cntp} = Tₛₕ : tₑ may hold. Still alternatively, a frame period T_{fps} based on a frame rate may be used in substitution for the accumulation time period Tₛₕ. The determination of the counting frequency is not limited to the above-mentioned example, and may be made by another method.

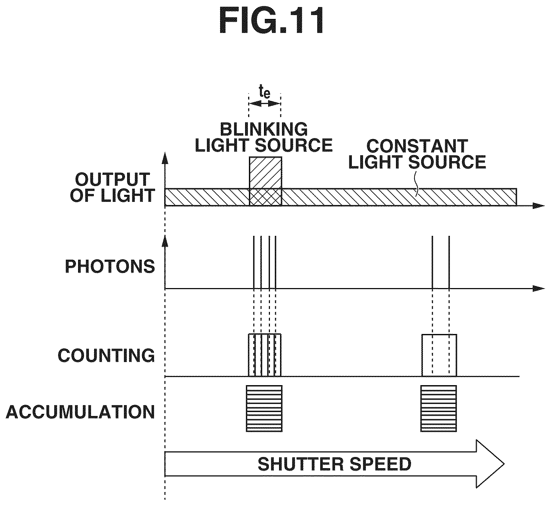

Fig. 11 is a chart for describing another example of the photon-counting operation according to the third embodiment. In the above-mentioned example illustrated in Fig. 10, counting is performed consecutively in the period in which the blinking light source emits light and the period in which only the constant light source emits light. Alternatively, as illustrated in Fig. 11, the counting time period with respect to the blinking light source and the counting time period with respect to the constant light source may be divided. A time duration of the counting time period with respect to the blinking light source and a time duration of the counting time period with respect to the light source may be equal or different from each other.

According to the present embodiment, similarly to the first and second embodiments, it is possible to suppress a counting loss in the image pickup element in the photon-counting method, suppress a degree of color shift that occurs at the time of imaging with the blinking light source, and improve brightness of an image and color reproducibility. Additionally, increasing the counting frequency according to the light emission time periods of the blinking light source makes it possible to suppress an increase in power consumption due to the increase in counting frequency in comparison with a case of increasing the counting frequency in all time periods regardless of the light emission time periods of the blinking light source. Additionally, in a case where both the blinking light source and the constant light source exist in a mixed manner, counting is performed with respect to the constant light source in addition to the blinking light source, whereby it becomes possible to perform imaging also in consideration of the constant light source.

The above-mentioned embodiments can be applied to a device including the image pickup element of the photon-counting method. For example, the present disclosure can be applied to an apparatus if it is capable of capturing an image such as a digital camera, a mobile phone, a portable-type image viewer, a television including an image pickup element, a digital photo frame, a music player, a gaming console, or an electronic book reader.

### (Other Embodiments of the Present Disclosure)

The present disclosure can also be implemented by installation of a program that implements one or more functions of the above-mentioned embodiments in a system or an apparatus via a network or a storage medium, and processing of loading and executing the program by one or more processors in the system or a computer of the apparatus. Furthermore, the present disclosure can also be implemented by a circuit (for example, an application specific integrated circuit (ASIC)) that implements one or more functions.

Each of the above-mentioned embodiments is merely a concrete example for implementing the present disclosure, and the technical scope of the present disclosure should not be interpreted in a limited manner by the embodiments. That is, the present disclosure can be implemented in various manners without departing from the technical idea or the principal features of the present disclosure.

The disclosure of the present embodiments includes the following configurations and methods.

### (Configuration 1)

An imaging apparatus including:
an image pickup element including a light receiving unit configured to output a pulse signal in response to incidence of a photon, and a counting unit configured to count the pulse signal; an acquisition unit configured to acquire a blinking frequency of a light source and a light emission time period of the light source; and
a control unit configured to control an exposure time period for an image in the image pickup element and a counting frequency at which the counting unit performs counting based on the acquired blinking frequency of the light source and the acquired light emission time period of the light source.

### (Configuration 2)

The imaging apparatus according to Configuration 1, in which the control unit is configured to control the exposure time period to match the acquired light emission time period of the light source.

### (Configuration 3)

The imaging apparatus according to Configuration 1 or 2, in which the control unit is configured to control the exposure time period so that a difference between the acquired light emission time period of the light source and the exposure time period does not exceed a permissible range.

### (Configuration 4)

The imaging apparatus according to any one of Configurations 1 to 3, in which the control unit is configured to control the counting frequency to allow the counting unit to perform counting a predetermined number of times within the exposure time period.

### (Configuration 5)

The imaging apparatus according to any one of Configurations 1 to 4, in which the control unit is configured to stop counting of the counting unit in a period other than the exposure time period.

### (Configuration 6)

The imaging apparatus according to any one of Configurations 1 to 5, in which the control unit is configured to control the counting frequency in the exposure time period to be higher than that in a period other than the exposure time period.

### (Configuration 7)

The imaging apparatus according to any one of Configurations 1 to 6, in which
the acquisition unit is configured to acquire respective blinking frequencies of a plurality of the light sources and respective light emission time periods of the plurality of light sources, and
the control unit is configured to control the exposure time period to match the light emission time period of at least one of the plurality of light sources.

### (Configuration 8)

The imaging apparatus according to Configuration 7, further including an image processing unit configured to combine images in a plurality of frames to generate one image, the images obtained by changing a light source subjected to counting, among the plurality of light sources, frame by frame.

### (Configuration 9)

The imaging apparatus according to Configuration 8, in which the image processing unit is configured to multiply the images in the plurality of frames by a gain according to the acquired blinking frequency of the light source to combine the images.

### (Configuration 10)

The imaging apparatus according to any one of Configurations 1 to 9, in which the control unit is configured to change the counting frequency between a light emission time period of a blinking light source and a light emission time period of a constant light source.

### (Configuration 11)

The imaging apparatus according to Configuration 10, in which
the acquisition unit is configured to acquire information regarding output of light from the blinking light source and output of light from the constant light source, and
the control unit is configured to determine the counting frequency based on the output of light from the blinking light source, the output of light from the constant light source, and a predetermined total value of a counted value with respect to the blinking light source and a counted value with respect to the constant light source within the exposure time period.

### (Configuration 12)

The imaging apparatus according to Configuration 10, in which the control unit is configured to determine the counting frequency based on an inverse ratio between the light emission time period of the blinking light source and shutter speed, and a predetermined total value of a counted value with respect to the blinking light source and a counted value with respect to the constant light source within the exposure time period.

### (Configuration 13)

The imaging apparatus according to any one of Configurations 1 to 12, in which the image pickup element is an image pickup element of a rolling shutter mode, and
the control unit is configured to control the exposure time period so that an exposure time period of each line of the image pickup element includes at least part of the light emission time period of the light source.

### (Method 1)

A method of controlling an imaging apparatus including an image pickup element that includes a light receiving unit configured to output a pulse signal in response to incidence of a photon and a counting unit configured to count the pulse signal, the method including:
acquiring a blinking frequency of a light source and a light emission time period of the light source; and
controlling an exposure time period for an image in the image pickup element and a counting frequency at which the counting unit performs counting based on the acquired blinking frequency of the light source and the acquired light emission time period of the light source.

According to the present disclosure, it is possible to control the exposure time and the counting frequency in the image pickup element of the photon-counting method according to the light emission time periods of the blinking light source, suppress a counting loss, and improve brightness of an image and color reproducibility.

Various embodiments have been described in detail above but it will be understood that the present disclosure is not limited to these embodiments and encompasses all modifications, variants, alternatives and equivalents falling within the scope of the appended claims.

## Claims

1. An imaging apparatus (100) comprising:
an image pickup element (102) including a light receiving means configured to output a pulse signal in response to incidence of a photon, and a counting means configured to count the pulse signal;
acquisition means (110) configured to acquire a blinking frequency of a light source and a light emission time period of the light source; and
control means (106) configured to control an exposure time period for an image in the image pickup element (102) and a counting frequency at which the counting means performs counting based on the acquired blinking frequency of the light source and the acquired light emission time period of the light source.

2. The imaging apparatus (100) according to claim 1, wherein the control means (106) is further configured to control the exposure time period so that a difference between the acquired light emission time period of the light source and the exposure time period does not exceed a permissible range.

3. The imaging apparatus (100) according to claim 1 or 2, wherein the control means (106) is further configured to control the exposure time period to match the acquired light emission time period of the light source.

4. The imaging apparatus (100) according to any one of claims 1 to 3, wherein the control means (106) is further configured to control the counting frequency to allow the counting means to perform counting a predetermined number of times within the exposure time period.

5. The imaging apparatus (100) according to any one of claims 1 to 4, wherein the control means (106) is further configured to stop counting by the counting means in a period other than the exposure time period.

6. The imaging apparatus (100) according to any one of claims 1 to 5, wherein the control means (106) is further configured to control the counting frequency in the exposure time period to be higher than a counting frequency in a period other than the exposure time period.

7. The imaging apparatus (100) according to any one of claims 1 to 6,
wherein the acquisition means (110) is further configured to acquire respective blinking frequencies of a plurality of the light sources and respective light emission time periods of the plurality of light sources, and
wherein the control means (106) is further configured to control the exposure time period to match the light emission time period of at least one of the plurality of light sources.

8. The imaging apparatus (100) according to claim 7, further comprising image processing means (103) configured to combine a plurality of frames, to generate one image, the plurality of frames being images obtained by changing a light source subjected to counting, among the plurality of light sources, frame by frame.

9. The imaging apparatus (100) according to claim 8, wherein the image processing means (103) is further configured to multiply the plurality of frames by a gain according to the acquired blinking frequency of the light source to combine the images.

10. The imaging apparatus (100) according to any one of claims 1 to 9, wherein the control means (106) is further configured to change the counting frequency between a light emission time period of a blinking light source and a light emission time period of a constant light source.

11. The imaging apparatus (100) according to claim 10,
wherein the acquisition means (110) is further configured to acquire information regarding output of light from the blinking light source and output of light from the constant light source, and
wherein the control means (106) is further configured to determine the counting frequency based on the output of light from the blinking light source, the output of light from the constant light source, and a predetermined total value of a counted value with respect to the blinking light source and a counted value with respect to the constant light source within the exposure time period.

12. The imaging apparatus (100) according to claim 10, wherein the control means (106) is further configured to determine the counting frequency based on an inverse ratio between the light emission time period of the blinking light source and shutter speed, and a predetermined total value of a counted value with respect to the blinking light source and a counted value with respect to the constant light source within the exposure time period.

13. The imaging apparatus (100) according to any one of claims 1 to 12,
wherein the image pickup element is an image pickup element of a rolling shutter mode, and
wherein the control means (106) is further configured to control the exposure time period so that an exposure time period of each line of the image pickup element includes at least part of the light emission time period of the light source.

14. A method of controlling an imaging apparatus (100) including an image pickup element that includes light receiving means configured to output a pulse signal in response to incidence of a photon and counting means configured to count the pulse signal, the method comprising:
acquiring (step S201) a blinking frequency of a light source and a light emission time period of the light source; and
controlling an exposure time period for an image in the image pickup element and a counting frequency at which the counting means performs counting based on the acquired blinking frequency of the light source and the acquired light emission time period of the light source.
